# EUROPÄISCHE PATENTANMELDUNG

(11) **EP 0 623 397 A1**
(43) Veröffentlichungstag der Anmeldung: **09.11.1994**
(21) Anmeldenummer: 94101986.1
(22) Anmeldetag: 09.02.1994
(51) Int. Cl.: B08B 15/00, F24F 13/20, F24F 13/24, F24F 3/16

(54) **Variable Staubabsaugung**

(30) Priorität: 11.02.1993 DE 9301943 U
(71) Anmelder: BECKER VERFAHRENSTECHNIK, DIPL. ING. ERNST BECKER GmbH & CO, D-71399 Korb (DE)
(72) Erfinder: Becker, Ernst Otto, D-71399 Korb (DE)
(74) Vertreter: Alber, Norbert

(57) **Zusammenfassung**

Die Erfindung betrifft eine variable Staubabsaugung mit einem Gebläse (2), einem Filter (3), einem Schalldämpfer (4), die insgesamt die Aggregate bilden, einer Absaugleiste und wenigstens einem Gehäuse, deren Einzelteile (5,6) in unterschiedlichen Stellungen zueinander und damit an unterschiedlichen Stellen des Raumes leicht angeordnet und auf Umgebungsbedürfnisse angepaßt werden können. Hierzu wird vorgeschlagen, daß die Aggregate in zwei getrennten, miteinander verbindbaren, rechteckigen Gehäusen untergebracht sind, die beiden Gehäuse eine rechteckige, flache Bauform aufweisen, mit gleicher Höhe und gleicher Erstreckung in einer weiteren Dimension, die zusammen die Paßseiten ergeben, in dem einen Gehäuse (5) der Filter und in dem anderen Gehäuse (6) das Gebläse und der Schalldämpfer untergebracht sind, wobei das Gehäuse des Filters in der einen Paßseite die Einströmöffnung und in der gegenüberliegenden Paßseite die Übergabeöffnung aufweisen.

## Beschreibung

An staubbelasteten Arbeitsplätzen wird versucht, die Atemluft vom Staub zu reinigen, um nachteilige Auswirkungen auf das dort arbeitende Personal zu vermeiden.

Einerseits sind hierbei mit Heiz- oder Klimageräten meist gekoppelte Filteranlagen bekannt, die die Raumluft an annähernd beliebiger Stelle absaugen und u. a. von Staubpartikeln reinigen.

Daneben sind gezielt eingesetzte Absauganlagen an den Entstehungsorten, wie etwa Schleifmaschinen, bekannt, die mit hoher Ansaugkraft arbeiten und daher sowohl einen hohen Energiebedarf haben als auch neben einer starken Geräuschentwicklung hohe Ausströmgeschwindigkeiten und damit leicht Zugerscheinungen bei den Menschen verursachen.

Weiterhin ist es bekannt, vor allem die Staubpartikel in der Größenordnung von 1µm bis 100µm, die vor allem für allergische Reaktionen bei Menschen verantwortlich sind, mit geringen Strömungsgeschwindigkeiten und großflächiger Absaugung sowohl an den Hinterkanten der Tische von Handarbeitsplätzen als auch an oder über den Maschinen abzusaugen. Dabei wird geachtet, daß sich die Absaugstellen, also die Öffnungen der Absaugleisten oder Absaugflächen, auf der vom Bediener gegenüberliegenden Seite des Entstehungsortes befinden, und andererseits die Austrittsöffnung der gefilterten Luft oberhalb und möglichst im Rücken des Bedieners stattfindet. Dadurch wird im Bereich zwischen dem Bediener und dem meist vor ihm liegenden Entstehungsort der Stäube eine permanente Luftbewegung vom Bediener auf den Entstehungsort und darüber hinweg zur Absaugstelle erzeugt, so daß die die Allergie erzeugenden Staubteilchen kaum mehr den Bediener und dessen Schleimhäute erreichen können, wie etwa in der DE-OS 43 00 830 beschrieben.

Dabei handelt es sich um fest installierte Absauganlagen, die in Bäckereien oder Steinmetzbetrieben oder anderen Staub erzeugenden Betrieben eingesetzt werden. Dabei sind die Aggregate, also Gebläse, Filter und Schalldämpfer, in einem gemeinsamen Gehäuse meist in der Mitte des Raumes an der Decke montiert, und zu diesem Aggregateblock wird die zu reinigende Luft über Rohrleitungen von den einzelnen Absaugstellen bzw. Absaugleisten herangeführt.

Derartige zentrale Absauganlagen benötigen zwar von jedem Aggregat nur ein einziges, ausreichend dimensioniertes Teil, auf der anderen Seite jedoch einen erhöhten Montageaufwand und einen noch größeren Ummontageaufwand, falls die Betriebsstätte, wie gerade bei Handwerksbetrieben leicht möglich, gewechselt werden muß, oder Maschinen umgestellt oder neu hineingekauft werden.

Darüber hinaus lohnen derartige zentrale Absauganlagen nur, wenn möglichst alle Entstehungsorte der Stäube innerhalb des Betriebes hiermit verbunden sind.

Es besteht jedoch ein Bedarf an flexibler zu handhabenden, kleineren Aggregaten, die entweder nur einen bestimmten Entstehungsort, beispielsweise den einzigen Handarbeitsplatz einer Bäckerei, entsorgen sollen, oder eine aufgrund zukünftiger Betriebsverlagerung oder veränderter Raumaufteilung anstehende Neumontage der Absauganlage erleichtern sollen.

Es ist daher die Aufgabe der vorliegenden Erfindung, eine Absauganlage zu schaffen, deren Einzelteile in unterschiedlichen Stellungen zueinander und damit an unterschiedlichen Stellen des Raumes leicht angeordnet und auf Umgebungsbedürfnisse angepaßt werden können.

Diese Aufgabe wird durch die kennzeichnenden Merkmale des Anspruchs 1 gelöst. Vorteilhafte Ausführungsformen ergeben sich aus den Unteransprüchen.

Um eine individuelle Montageanpassung zu ermöglichen, sind die Aggregate der Staubabsaugung, also Gebläse, Filter und Schalldämpfer, in zwei getrennten Gehäusen untergebracht, die auf unterschiedliche Art und Weise zueinander angeordnet und miteinander verbunden werden können, wobei die flachen, rechteckigen Gehäuse nicht nur in der Höhe, sondern in einer weiteren Dimension übereinstimmen:

Dadurch können die beiden Gehäuse sowohl in fluchtender Lage, aneinander befestigt z.B. waagerecht an der Decke montiert werden, oder in winkliger Lage, so daß das obere Gehäuse waagerecht liegt und das untere Gehäuse senkrecht stehend darunter an dessen Hinterkante angeordnet ist. Eine solche winklige Gestaltung könnte sowohl unter der Decke als auch im Winkel zwischen Decke und Wand als auch an der Wand unterhalb der Decke befestigt werden.

Dies hängt nicht nur von der Raumhöhe, sondern auch von der Position der zu entsorgenden Stelle ab:
Bei Einzelplatzentsorgung kann eine solches Gerät direkt auf die Absaugleiste aufgesetzt werden, oder auch im Abstand hierzu mit einer einfachen Rohrverbindung unter der Decke.

Bei Umstellung der Arbeitsplätze oder Maschinen innerhalb der Betriebsräume oder im Wechsel der Betriebsräume können derartige variabel zu montierende Staubentsorgungsanlagen mit erheblich geringerem Ummontageaufwand angepaßt werden, als zentrale Staubentsorgungsanlagen, bei denen ja auch die beim Zentralaggregat stattfindende Abgabe der gereinigten Luft ebenfalls unter Berücksichtigung der vorhandenen Maschinen und Arbeitsplätze gewählt wurde und genau diese Positionierung, z.B. durch Neukauf vor allem größerer Maschinen, vollständig geändert werden kann.

Eine weitere Möglichkeit besteht darin, derartige flexible Anlagen zur Einzelplatzentsorgung einer der stärksten Staubquellen probeweise einzusetzen, und nach befriedigender Prüfung eine Gesamtentsorgung durch zusätzliche solcher mobilen Anlagen vorzunehmen.

Die beiden Gehäuse sind gleich hoch und gleich breit, haben jedoch verschiedene Längen, so daß jedes Gehäuse zwei Paßseiten aufweist, mit denen es fluchtend an den gleich großen Paßseiten des anderen Gehäuses angesetzt und mit diesem verbunden werden kann.

Das eine Gehäuse enthält dabei den üblicherweise als Taschenfilter ausgebildeten Filter, bei dem Glasfasermatten als Filtermedium eingesetzt ist. Dabei wird dieses Gehäuse von der einen zur anderen Paßseite geradlinig durchströmt, wobei der Boden der Taschenfilter parallel zu der Übergabeöffnung dieses Gehäuses liegt. Die Übergabeöffnung ist die Paßseite des Gehäuses, die gegenüber der Eintrittsöffnung liegt.

Da die Gehäuse aus Winkelprofilen als Kanten und dazwischen angeordneten Platten bestehen, wird auf den Paßseiten dieses Gehäuses die komplette Seitenwand in Form einer Platte weggelassen, so daß der gesamte Querschnitt der Paßseite als Einströmöffnung und Übergabeöffnung dient.

Die dem Benutzer zugewandte Flachseite dieses Gehäuses ist ebenfalls ohne Demontage des gesamten Gehäuses leicht entfernbar. Durch diese entfernbare Flachseite kann der Taschenfilter herausgenommen und geprüft bzw. gewechselt werden.

Das andere Gehäuse enthält hintereinander das Gebläse und einen Schalldämpfer vor der Austrittsöffnung. Austrittsöffnung ist wiederum eine der Paßseiten dieses zweiten Gehäuses, während als Übergabeöffnung und damit Eintrittsöffnung des zweiten Gehäuses wahlweise die gegenüberliegende Paßseite oder eine Öffnung in einer der Flachseiten dient, die sich in dem von der Austrittsöffnung entfernten Rand der Flachseite befindet. Je nach dem von welcher Seite her das erste Gehäuse mit dem Filter angesetzt wird, wird die jeweils nicht benötigte, andere Übergabeöffnung durch einen Deckel verschlossen.

Auch hier ist eine der Flachseiten des Gehäuses entfernbar zur Kontrolle des Inneren, und zwar die Flachseite, die keine Übergabeöffnung enthält.

In dem in Durchströmungsrichtung ersten Teil dieses Gehäuses ist ein Gebläse angeordnet, welches von einem eigenen Gehäuse umgeben ist und in axialer Richtung einseitig ansaugt und die Luft tangential ausstößt, wobei eine Orientierung in Richtung der Austrittsöffnung gewählt wird. Dieses Gebläse ist in derjenigen Gehäusehälfte untergebracht, in der die Übergabeöffnungen ausgebildet sind, jedoch in der Nähe derjenigen Flachseite, die keine Übergabeöffnung enthält, also in der Regel nahe der oberen Flachseite.

Bei Anordnung des Filtergehäuses senkrecht und unterhalb dem zweiten Gehäuse findet damit eine Strömung durch die Übergabeöffnung direkt in den axialen Ansaugbereich des Gebläses statt, und auch bei fluchtender Anordnung der beiden Gehäuse kann ein Umströmen des Gebläses auf die Ansaugseite problemlos stattfinden.

Der andere Teil des zweiten Gehäuses wird als Schalldämpfer genutzt, indem die vier umgebenden Seitenwände auf der Innenseite des Gehäuses mit Schaumstoff belegt sind, welcher eine gewaffelte Oberfläche oder eine andere, die Oberfläche stark vergrößernde Oberflächenform, etwa nebeneinander stehende Kegel mit quadratischem Grundriß, aufweisen. Zusätzlich ragt etwa in der Mitte der Durchlaufrichtung des Schalldämpfers eine Umlenkwand vom Boden bis auf etwa die halbe Höhe des Querschnittes auf, die mit dem gleichen Material belegt ist.

Um eine ausreichende Verwirbelung des Luftstromes und damit eine Verbesserung der Schalldämmwirkung zu erzielen, ist am Beginn des Schalldämpfers ein feineres und am Ende ein gröberes Lochblech über den gesamten Querschnitt quer zur Durchströmungsrichtung angeordnet, um eine Aufteilung in einzelne, kleinere Luftströme zu gewährleisten.

Die Austrittsöffnung am Ende des zweiten Gehäuses ist vorzugsweise mit einstellbaren Leitblechen, die um waagerechte Achsen verschwenkbar sind zur Einstellung der Auströmungsrichtung, ausgestattet.

Die Absaugleisten, die mit der Eintrittsöffnung des Absaugaggregates in Verbindung stehen, besitzen einen Querschnitt in Form eines rechtwinkligen Dreieckes, dessen einer Rechteck-Schenkel z.B. an der Wand befestigbar ist und wobei die schräg überhängende Basisseite des Rechtecks die offene Absaugseite ist. In dieser Absaugseite sind im Abstand zueinander waagerechte Leitbleche angeordnet, um eine gleichmäßige Saugwirkung über die gesamte Höhe der Absaugleiste zu gewährleisten.

Eine Ausführungsform gemäß der Erfindung ist nachfolgend beispielhaft näher beschrieben:
Es zeigen
- Fig. 1: eine Seitenansicht der beiden Gehäuse fluchtend waagerecht unter der Decke und
- Fig. 2: eine Ansicht der beiden Gehäuse winklig zueinander an einer Wand.

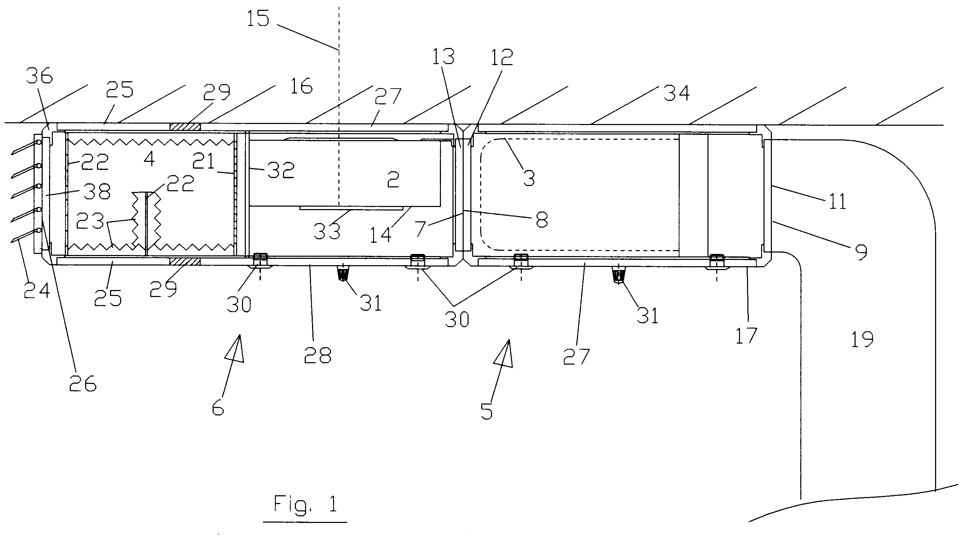

Zusätzlich ist in Fig. 1 die Absaugstelle selbst nicht dargestellt, sondern lediglich das an die Einströmöffnung 11 des in Flußrichtung ersten Gehäuses 5 anschließende Rohrleitung 19, über die die von der Absaugstelle abgenommene, staubbelastete Luft den Aggregaten zugeführt wird.

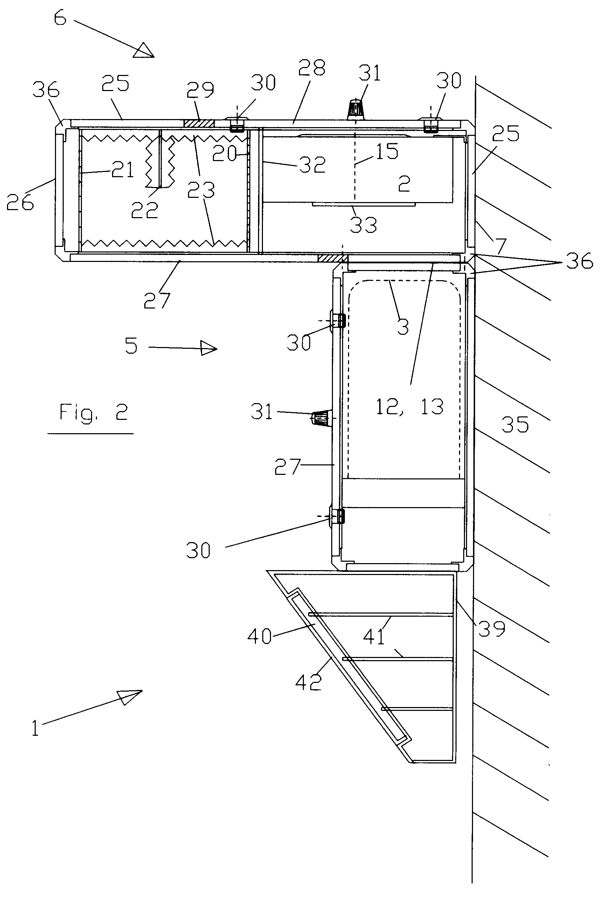

An der Absaugstelle selbst kann dann wiederum eine fest installierte Absaugleiste 1 - wie in Fig. 2 dargestellt - angeordnet sein, oder eine flexibel gehalterte Absaugleiste, die je nach Arbeitserfordernis positioniert werden kann.

Bei der in Fig. 1 dargestellten Lösung fluchten die beiden Gehäuse 5 und 6 mit ihren Flachseiten und sind waagerecht unter der Decke montiert.

In Durchflußrichtung liegt im Gehäuse 5 der Taschenfilter 3 mit ebenfalls waagerechter Ausrichtung, so daß die an der rechten, offenen Paßseite 9 über die Einströmöffnung 11 einströmende Luft das Gehäuse 5 gerade durchläuft und durch die Übergangsöffnung 12 wieder verläßt.

Da die beiden Gehäuse 5 und 6 mit ihren Paßseiten 7 und 8, die deckungsgleich sind, aneinander liegen, fluchtet auch die Übergabeöffnung 12 mit der Übergabeöffnung 13 des Gehäuses 6.

Die untere Flachseite 17 des Gehäuses 5 ist als Deckel 27 nach Lösen der Schrauben 30 mit einem Griff 31 abnehmbar, so daß ohne Montage des gesamten Gehäuses 5 über die dann offene Flachseite der Taschenfilter 3 entnommen werden kann.

Das Gehäuse 6 weist an den oberen und unteren Flachseiten 16, 17 in dem Rahmen, der aus den die Kanten bildenden Winkelprofilen 36 und entsprechenden Eckstücken besteht, jeweils einen Steg 29 auf, der die Flachseite in zwei getrennte Felder unterteilt, von denen das kleinere den Abmessungen der Übergabeöffnungen 12 und 13 entspricht, um mit Hilfe dieser Öffnungen ein winkliges Aneinandersetzen der Gehäuse 5 und 6 zu ermöglichen, wie in Fig. 2 dargestellt.

In Fig. 1 sind bei der oberen Flachseite beide Öffnungen mit Deckeln 25, 28 fest verschlossen.

Bei der unteren Flachseite dagegen ist der Steg näher zur linken, der Austrittsseite hin, montiert, so daß die große Öffnung der unteren Flachseite sich unterhalb des Gebläses 2 befindet. Der dort verschraubte Deckel 28 kann dann wiederum mit Hilfe der Schrauben 30 und des Griffes 31 leicht abgenommen werden, wodurch das in der rechten Hälfte des Gehäuses 6 untergebrachte Gebläse 2 zu Wartungs- oder Austauschzwecken voll zugänglich ist.

Für den in der linken Hälfte angeordneten Schalldämpfer ist dies nicht notwendig, da der Schalldämpfer keine mechanischen, verschleißenden Teile enthält, und aufgrund der an dieser Stelle bereits gereinigten Luft auch kaum mehr verschmutzt.

Wird dagegen eine winklige Lage der Gehäuse 5 und 6 zueinander beabsichtigt, wie in Fig. 2 dargestellt, so wird in der jetzt das Gehäuse 5 in senkrechter Lage, mit nach unten gerichteter Einströmöffnung 11 unter den hinteren Bereich des Gehäuses 6 gesetzt, so daß deren Hinterkanten miteinander fluchten. Dadurch ist eine Montage an einer Wand möglich. Um an dieser Stelle eine Übergangsöffnung 12 in dem Gehäuse 6 zu schaffen, wird in diesem Falle der Steg 29 in der unteren Flachseite des Gehäuses 6 näher zur rechten Wand des Gehäuses 6 hin eingesetzt, so daß die entstehende kleine Öffnung mit der Übergabeöffnung 12 des unteren Gehäuses 5 fluchtet. Die links vom Steg entstehende große Öffnung wird mittels eines festen Deckels 27 verschlossen, während der mittels Verschraubung entfernbare Deckel 28 in die obere Flachseite eingesetzt wird und von dort her die Zugänglichkeit zum Gebläse 2 zu gewährleisten.

Durch die Anpassung der Abnmessungen sind somit die die kleinen Öffnungen in den Flachseiten verschließenden Deckel 25 auch geeignet zum Verschließen der stirnseitigen Öffnungen, beispielsweise der rechten Paßseite 7 des Gehäuses 6 in Fig. 2.

Ebenso sind die Deckel - ob mittels Verschraubung leicht lösbar (28) oder fest montiert (27) - sowohl für die großen Öffnungen in den Flachseiten des Gehäuses 6 als auch alleine zum Verschließen der Flachseiten des Gehäuses 5 passend. Da die Höhe beider Gehäuse ebenso übereinstimmt wie eine weitere Dimension, können die aus Winkelprofilen 36 aufgebauten Gehäuserahmen aus einer nur geringen Anzhl unterschiedlicher Einzelbauteile zusammengesetzt werden.

Wie den Fig. 1 und 2 zu entnehmen, ist das radial arbeitende Gebläse 2 mit seiner Drehachse 15 senkrecht stehend, also rechtwinklig zu den Flachseiten des Gehäuses 6, in der oberen Flachseite angeordnet. Dadurch ist bei Anordnung des Gehäuses 5 entweder rechts und waagerecht neben dem Gehäuse 6 oder senkrecht und unterhalb des Gehäuses 6 immer eine gute Strömung aus dem Gehäuse 5 in die axiale, untere Ansaugstelle des Gebläses 2 möglich.

Das Gebläse 2 gibt die beschleunigte Luft tangential, in Blickrichtung der Fig. 1 und 2 waagerecht von rechts nach links fließend - an den linken Teil des Gehäuses 6 ab, in dem der Schalldämpfer angeordnet ist. Dieser besteht aus einer Durchflußkammer, gebildet aus den oberen und unteren Flachseiten sowie Seitenwänden des Gehäuses 6, die mit einem Schaumstoff 23 mit gewaffelter oder mit Kegeln besetzter Oberfläche ausgestattet sind. Ebenso ist auch die quer verlaufende Umlenkwand 22, die sich über die halbe Höhe von oben oder von unten her in Durchflußrichtung quer befindet, mit diesem Schaumstoff 23 belegt.

Weiterhin ist der Einlaß des Schalldämpfers durch ein quer verlaufendes, feines Lochblech 20 sowie der Ausgang des Schalldämpfers durch ein ebenfalls quer über den gesamten inneren Querschnitt verlaufendes, grobes Lochblech begrenzt. Dadurch wird eine Egalisierung in verschiedene Teilströme und eine Verbesserung der Schallreduzierung erreicht.

Wie in Fig. 1 dargestellt, können an der Austrittsöffnung 38 um waagerechte Achsen drehbare Leitbleche 24 angeordnet sein, die gemeinsam verstellbar und justierbar sind, um den austretenden Luftstrom in die gewünschte Richtung zu leiten.

Die Absaugung der Luft von der vorgesehenen Staubentstehungsstelle erfolgt über die in Fig. 2 dargestellte Absaugleiste 1, die im Querschnitt dreieckig ausgebildet ist, wobei sich die zueinander rechtwinkligen Schenkel des Dreiecks waagerecht bzw. senkrecht befinden und das Gehäuse 39 bilden, während die schräg überhängende Basis des Dreiecks die offene, der Luftabsaugung dienende Seite dieses aus Stahlblech bestehenden Kanals ist. Um eine gleichmäßige Luftabsaugung und übereinstimmende, möglichst geringe Strömungsgeschwindigkeiten einzuhalten, sind in der Eintrittsöffnung 40 der Absaugleiste 1 waagerecht übereinander liegende Leitbleche 41 zusätzlich innerhalb zu dem die Eintrittsöffnung abdeckenden Gitters 42 vorhanden. angeordnet.

## Patentansprüche

1. Variable Staubabsaugung mit
- einem Gebläse,
- einem Filter,
- einem Schalldämpfer,
die insgesamt die Aggregate bilden,
- einer Absaugleiste und
- wenigstens einem Gehäuse,
**dadurch gekennzeichnet, daß**
- die Aggregate in zwei getrennten, miteinander verbindbaren, rechteckigen Gehäusen (5, 6) untergebracht sind,
- die beiden Gehäuse (5, 6) eine rechteckige, flache Bauform aufweisen mit gleicher Höhe und gleicher Erstreckung in einer weiteren Dimension, die zusammen die Paßseiten (6 bis 10) ergeben,
- in dem einen Gehäuse (5) der Filter (3) und in dem anderen Gehäuse (6) das Gebläse (2) und der Schalldämpfer (4) untergebracht sind, wobei das Gehäuse (5) des Filters in der einen Paßseite (9) die Einströmöffnung (11) und in der gegenüberliegenden Paßseite (8) die Übergabeöffnung (12) aufweisen.

2. Staubabsaugung nach Anspruch 1,
**dadurch gekennzeichnet, daß**
in dem anderen Gehäuse (6)
- das Gebläse (2) angeordnet ist, welches ein eigenes Gebläsegehäuse (14) aufweist und einseitig axial ansaugt sowie tangential abbläst,
- das Gebläse (2) in dem von der Austrittsöffnung (38) abgewandten Teil des Gehäuses (6) so angeordnet ist, daß die Drehachse (15) des Gebläses (2) parallel zu den Paßseiten (6, 7) und nahe an der von der Ansaugsseite des Gebläses (2) abgewandten Flachseite (16) des Gehäuses (6) angeordnet ist,
- die Austrittsöffnung (38) in einer Paßseite (26) des Gehäuses (6) angeordnet ist und
- der Schalldämpfer (4) im Gehäuse (6) zwischen der Austrittsöffnung (38) und dem Gebläse (2) angeordnet ist, und
- Übergabeöffnungen (12) sowohl in der der Austrittsöffnung (38) gegenüberliegenden Paßseite (7) als auch in der Flachseite (16) auf der Seite und im Bereich der Ansaugung des Gebläses (2) angeordnet ist.

3. Staubabsaugung nach einem der vorhergehenden Ansprüche,
**dadurch gekennzeichnet, daß**
das Gehäuse (6) sowohl mit seiner oberen Flachseite (15) als auch mit seiner der Austrittsöffnung (38) gegenüberliegenden Paßseite (7) am Gebäude befestigbar ist,
- das Gehäuse (5) mit seiner Übergabeöffnung (12) sowohl in waagerechter Lage mit seiner Paßseite (8) an die Paßseite (7) des Gehäuses (6) befestigbar ist, als auch in senkrechter Lage unterhalb des Gehäuses (6) mit fluchtender Ausrichtung der hinteren Flachseite des Gehäuses (5) zur Paßseite (7) des Gehäuses (6),
- wobei jeweils die Übergangsöffnungen (12 und 13) miteinander fluchten, und die gerade nicht benötigte Übergabeöffnung (13) des Gehäuses (6) durch einen Deckel (25) verschlossen wird.

4. Staubabsaugung nach einem der vorhergehenden Ansprüche,
**dadurch gekennzeichnet, daß**
die Eintrittsöffnung (11) des Gehäuses (5) direkt mit der Absaugleiste (1) verbunden ist.

5. Staubabsaugung nach einem der vorhergehenden Ansprüche,
**dadurch gekennzeichnet, daß**
die Gehäuse (5, 6) aus Winkelprofilen (36) mit stark abgeschrägten Außenkanten und identischem Querschnitt als Kanten und Plattenelementen (25, 27, 28) als Seitenflächen aufgebaut sind, die leicht als Deckel (27) demontierbar und untereinander verbindbar sind.

6. Staubabsaugung nach einem der vorhergehenden Ansprüche,
**dadurch gekennzeichnet, daß**
bei dem Gehäuse (5) die untere bzw. vordere Flachseite leicht vom Gehäuse (5) entfernt werden kann.

7. Staubabsaugung nach einem der vorhergehenden Ansprüche,
**dadurch gekennzeichnet, daß**
die obere Flachseite (15) des Gehäuses (6) leicht vom Gehäuse (6) entfernbar ist.

8. Staubabsaugung nach einem der vorhergehenden Ansprüche,
**dadurch gekennzeichnet, daß**
als Filter (3) Taschenfilter im Gehäuse (5) angeordnet sind, deren Boden parallel zu und in der Nähe der Übergabeöffnung (12) angeordnet ist und die durch den abnehmbaren Deckel (27) kontrollierbar und wechselbar sind.

9. Staubabsaugung nach einem der vorhergehenden Ansprüche,
**dadurch gekennzeichnet, daß**
der Schalldämpfer (4) in Durchflußrichtung nacheinander
- ein Lochblech (20) mit wenigstens 50 % Lochanteil in der Nähe des Auslasses des Gebläses (2) quer zur Strömungsrichtung über den gesamten Innenquerschnitt des Schalldämpfers (4) aufweist,
- in der Nähe der Austrittsöffnung (38) ein gröberes Lochblech (21) mit wenigstens 50 % Lochanteil quer zur Strömungsrichtung über den gesamten Innenquerschnitt des Gehäuses (6) aufweist,
- etwa in der Mitte zwischen den beiden Lochblechen quer zur Strömungsrichtung über die gesamte Breite und vom unteren Ende bis etwa zur Mitte des freien Querschnittes aufragend eine Umlenkwand (22) angeordnet ist,
- die vier Umfangswände des Gehäuses (6) zwischen den Lochblechen (20, 21) als auch die Flächen der Umlenkwand (22) mit gewaffeltem Schaumstoff (23) belegt sind.

10. Staubabsaugung nach einem der vorhergehenden Ansprüche,
**dadurch gekennzeichnet, daß**
in der Austrittsöffnung (38) parallel zueinander verlaufende, um waagerechte Achsen schwenkbare, Leitbleche (24) zum Bestimmen der Auströmrichtung der gereinigten Luft angeordnet sind.
